# EUROPEAN PATENT APPLICATION

(11) **EP 4 524 443 A1**
(43) Date of publication of application: **19.03.2025**
(21) Application number: 23831486.8
(22) Date of filing: 28.06.2023
(51) Int. Cl.: F16L 21/04, F16L 21/08

(54) **PIPE JOINT**

(30) Priority: 01.07.2022 JP 2022106749
(71) Applicant: Kubota Corporation, Osaka-shi, Osaka 556-8601 (JP)
(72) Inventor: KOMARU, Yuito, Amagasaki-shi, Hyogo 660-0095 (JP); TANAKA, Ryunosuke, Amagasaki-shi, Hyogo 660-0095 (JP); ODA, Keita, Amagasaki-shi, Hyogo 660-0095 (JP)
(74) Representative: Canzler & Bergmeier Patentanwälte Partnerschaft mbB
(86) International application number: PCT/JP2023/023906
(87) International publication number: WO 2024/005046

(57) **Abstract**

A pipe joint 1 comprises: a spigot end 3 formed on a first pipe 2; a socket 5 formed on a second pipe 4; a lock ring groove 7 formed on an inner circumference of the socket 5; a lock ring 8 accommodated in the lock ring accommodation groove 7; and a spigot end engagement portion 10 formed on an outer circumference of the spigot end 3. The spigot end engagement portion 10 is caught on the lock ring 8 in a state in which the spigot end 3 is inserted in the socket 5, thereby preventing the spigot end 3 from coming off from the socket 5. The socket 5 has, on the inner circumference, an inner tapered surface 30 expanding radially from an inner end of the socket 5 toward an opening end of the socket 5, and a bending angle limiting portion 34 projecting inward in a pipe radial direction from the inner circumference of the socket 5. The inner tapered surface 30 is formed between the lock ring accommodation groove 7 and an inner end portion 26 of the socket 5. The bending angle limiting portion 34 prevents the first pipe 2 from bending with respect to the second pipe 4 beyond an allowable angle.

## Description

### Technical Field

The present invention relates to a pipe joint with a function to prevent a spigot from being separated from a socket.

### Background Art

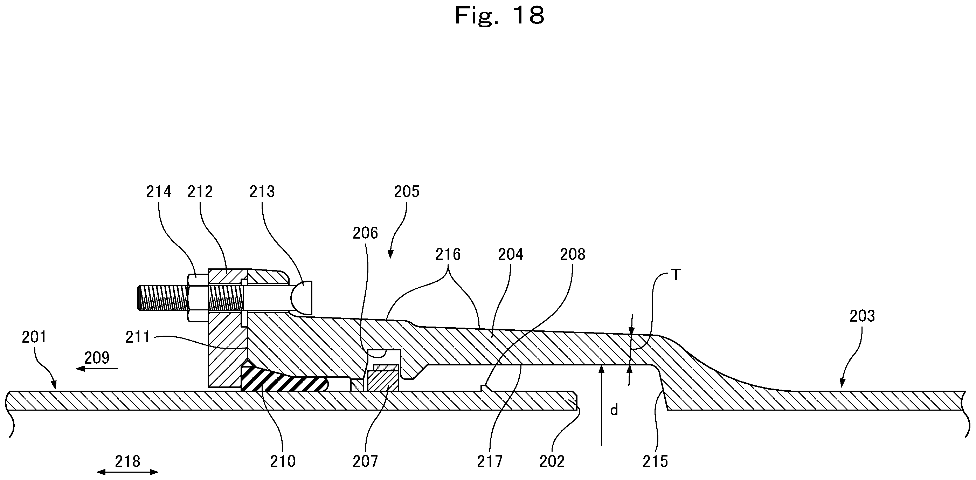

Conventionally, as this kind of a pipe joint, as illustrated in, for example, Fig. 18, there is a pipe joint 205 in which a spigot 202 of a first pipe 201 is inserted into a socket 204 of a second pipe 203. A lock ring accommodation groove 206 is formed on an inner circumference of the socket 204. A lock ring 207 is accommodated in the lock ring accommodation groove 206. A spigot projection 208 is formed on an outer circumference of the spigot 202. The spigot projection 208 is caught on the lock ring 207 from a deeper portion of the socket 204 in a separation direction 209 of the spigot 202, thereby preventing the spigot 202 from being separated from the socket 204.

A seal member 210 that seals between the inner circumference of the socket 204 and the outer circumference of the spigot 202 is inserted between the inner circumference of the socket 204 and the outer circumference of the spigot 202 from an opening of an opening end face 211 of the socket 204. A push ring 212 that pushes in the seal member 210 is connected to the socket 204 with a bolt 213 and a nut 214.

The first pipe 201 and the second pipe 203 are ductile steel pipes that are cast by, for example, a centrifugal casting method. In order to pull out these pipes 201, 203 from a centrifugal casting mold at the time of centrifugal casting, the socket 204 has, on an outer circumference, an outer tapered surface 216 that gradually expands radially from the position of a deeper end face 215 of the socket 204 toward the position of the opening end face 211.

The inner circumference surface 217 of the socket 204 is parallel to the pipe axis of the second pipe 203 between a position in the vicinity of the lock ring accommodation groove 206 and the deeper end face 215 of the socket 204 in a pipe axis direction 218. Accordingly, an inner diameter d of the socket 204 becomes constant between the position in the vicinity of the lock ring accommodation groove 206 and the deeper end face 215 of the socket 204.

Note that reference can be made to Japanese Patent Laid-Open No. 2022-74980 for the pipe joints 205 as described above.

### Summary of Invention

### Technical Problem

In the above-described conventional form, a pipe thickness T of the socket 204 gradually increases from the deeper end face 215 of the socket 204 toward the lock ring accommodation groove 206. Therefore, there is unfortunately a problem that the weight of the socket 204 increases, which also increases the weight of the entire pipe.

In addition, it is conceivable to increase the inner diameter d of the socket 204 to decrease the pipe thickness T of the socket 204, thereby reducing the weight of the socket 204. However, in this case, the pipe thickness T in a position in the vicinity of the deeper end face 215 of the socket 204 becomes excessively thin, and there is a risk that the strength of this portion becomes insufficient.

An object of the present invention is to provide a pipe joint capable of reducing the weight of a socket.

### Solution to Problem

A pipe joint of the present invention includes:
a spigot formed in a first pipe;
a socket formed in a second pipe;
a lock ring accommodation groove formed in an inner circumference of the socket;
a lock ring accommodated in the lock ring accommodation groove; and
a spigot engagement portion formed in an outer circumference of the spigot,
the spigot engagement portion being caught on the lock ring from a deeper portion of the socket in a separation direction of the spigot in a state in which the spigot is inserted into the socket, thereby capable of preventing the spigot from being separated from the socket,
wherein the socket has, on an inner circumference, an inner tapered surface expanding radially from a deeper end portion of the socket toward an opening end portion of the socket, and a bending angle limiting portion projecting inward from the inner circumference of the socket in a pipe radial direction,
the inner tapered surface is formed between the lock ring accommodation groove and the deeper end portion of the socket, and
the bending angle limiting portion prevents the first pipe from being bent with respect to the second pipe beyond an allowable angle.

According to this, the socket has, on the inner circumference, the inner tapered surface expanding radially from the deeper end portion of the socket toward the opening end portion of the socket. Therefore, compared with a socket having an inner circumferential surface parallel to a pipe axis, the pipe thickness of the socket becomes thinner between the lock ring accommodation groove and the deeper end portion of the socket. Accordingly, the weight of the socket can be reduced. Furthermore, since the socket has the inner tapered surface as described above, the pipe thickness at a position in the deeper end portion of the socket is maintained to be a sufficient thickness, and there is no shortage of strength in the deeper end portion of the socket.

With the inner tapered surface of the socket, the bending angle of the spigot with respect to the socket increases, and the bending performance of the first pipe and the second pipe improves. Accordingly, since the first pipe and the second pipe are sufficiently bent in response to shaking at the time of the occurrence of an earthquake, damage to the pipes can be prevented.

In this manner, although the bending performance of the first pipe and the second pipe improves, when the first pipe and the second pipe are excessively bent, there may be inconvenience that water leakage occurs between the spigot and the socket. In such a case, when the spigot abuts to the bending angle limiting portion of the socket, the bending angle of the spigot with respect to the socket is limited to the allowable angle or less. Therefore, the spigot can be prevented from being excessively bent with respect to the socket, and water leakage can be prevented from occurring between the spigot and the socket.

According to the pipe joint of the present invention, it is preferable for the socket to have, on an outer circumference, an outer tapered surface expanding radially from a deeper portion of the socket toward the opening end portion of the socket.

According to this, the pipe thickness of the socket can be made substantially uniform between the lock ring accommodation groove and the deeper end portion of the socket.

According to the pipe joint of the present invention, it is preferable that a spacer for limiting movement of the spigot in an insertion direction into the socket is provided between a distal end portion of the spigot and the deeper end portion of the socket,
a centering surface is formed between the inner tapered surface and the deeper end portion of the socket at a deeper portion of the socket than the bending angle limiting portion, and
the spacer includes a first contacting portion for centering contacting an inner circumferential surface of the bending angle limiting portion, and a second contacting portion for centering contacting the centering surface.

According to this, since the spacer is provided between the distal end portion of the spigot and the deeper end portion of the socket, the movement of the spigot in the insertion direction to the socket is limited. In addition, since the spigot engagement portion is caught on the lock ring, the movement of the spigot in the separation direction is limited. Therefore, the relative movement of the spigot and the socket in the pipe axis direction is limited. Accordingly, in a portion on which an uneven force is applied to a conduit, the movement of the pipe joint is limited, and the expansion/contraction function between the spigot and the socket and the bending function of the spigot and the socket are regulated. Accordingly, it is possible to prevent an adverse effect on the sealing performance of the pipe joint caused by the conduit stretching/contracting or bending in the direction in which the uneven force is applied to.

When providing the spacer inside the socket, the first contacting portion for centering of the spacer contacts the inner circumferential surface of the bending angle limiting portion, and the second contacting portion for centering contacts the centering surface. Therefore, the attachment position of the spacer does not shift in the pipe radial direction, which can facilitate the centering work of the spacer with respect to the socket.

According to the pipe joint of the present invention, it is preferable that the spacer includes a cylindrical spacer body arranged between the distal end portion of the spigot and the deeper end portion of the socket, and is divided into a plurality of arc-shaped segments in a pipe circumference direction,
end portions of the segments adjacent to each other in the pipe circumference direction are connected to each other,
the first contacting portion for centering is provided in one end portion of the spacer body in the pipe axis direction,
the second contacting portion for centering is provided in the other end portion of the spacer body in the pipe axis direction,
a space is formed between the first contacting portion for centering and the second contacting portion for centering in the pipe axis direction, and between an outer circumferential surface of the spacer body and the inner tapered surface in the pipe radial direction, and
the interval between the outer circumferential surface of the spacer body and the inner tapered surface in the pipe radial direction increases toward the opening end portion of the socket.

According to this, when the plurality of segments are arranged inside the socket to assemble the spacer, the space is formed between the outer circumferential surface of the spacer body and the inner tapered surface. Therefore, there is no fear of an operator's hand being pinched between the outer circumferential surface of the spacer body and the inner tapered surface. Accordingly, the safety and the workability of the assembly work of the spacer are improved.

### Advantageous Effects of Invention

As described above, according to the present invention, since the socket has, on the inner circumference, the inner tapered surface expanding radially from the inner end of the socket toward the opening end portion of the socket, compared with a socket having an inner circumferential surface parallel to a pipe axis, the pipe thickness of the socket becomes thinner between the lock ring accommodation groove and the deeper end portion of the socket. Accordingly, the weight of the socket can be reduced, and the weight of the entire pipe is reduced.

### Brief Description of Drawings

[Fig. 1] Fig. 1 is a cross-sectional view of a pipe joint in a first embodiment of the present invention, and illustrates a situation in which a spigot is inserted into a socket with a regular insertion amount, and the spigot is not bent with respect to the socket.
[Fig. 2] Fig. 2 is a cross-sectional view of the pipe joint in the first embodiment, and illustrates a situation in which the spigot is inserted into the socket with the regular insertion amount, and the spigot is bent with respect to the socket.
[Fig. 3] Fig. 3 is a partially enlarged cross-sectional view of the pipe joint in Fig. 2.
[Fig. 4] Fig. 4 is a cross-sectional view of a pipe joint in a first reference example for the present invention, and illustrates a situation in which the spigot is inserted into the socket with a regular insertion amount, and the spigot is bent with respect to the socket.
[Fig. 5] Fig. 5 is a partially enlarged cross-sectional view of the pipe joint in Fig. 4.
[Fig. 6] Fig. 6 is a cross-sectional view of a pipe joint in a second reference example for the present invention, and illustrates a situation in which the spigot is inserted into the socket with a regular insertion amount, and the spigot is bent with respect to the socket.
[Fig. 7] Fig. 7 is a cross-sectional view of the pipe joint in the first embodiment, and illustrates a situation in which the spigot is inserted into the socket with an insertion amount greater than the regular insertion amount, and the spigot is bent with respect to the socket.
[Fig. 8] Fig. 8 is a partially enlarged cross-sectional view of the pipe joint in Fig. 7.
[Fig. 9] Fig. 9 is a cross-sectional view of a pipe joint in a third reference example for the present invention, and illustrates a situation in which the spigot is inserted into the socket with an insertion amount greater than a regular insertion amount, and the spigot is bent with respect to the socket.
[Fig. 10] Fig. 10 is a partially enlarged cross-sectional view of the pipe joint in Fig. 9.
[Fig. 11] Fig. 11 is a cross-sectional view of the pipe joint in the first embodiment, and illustrates a situation in which the spigot is bent with respect to the socket in a state in which the spigot is moved in a separation direction and a spigot projection is engaged with a lock ring.
[Fig. 12] Fig. 12 is a diagram of a conduit including a pipe joint in a second embodiment of the present invention.
[Fig. 13] Fig. 13 is a cross-sectional view of the pipe joint in the second embodiment.
[Fig. 14] Fig. 14 is a front view of a spacer provided to the pipe joint illustrated in Fig. 13.
[Fig. 15] Fig. 15 is a diagram illustrating a procedure for assembling the spacer.
[Fig. 16] Fig. 16 is a diagram illustrating a procedure for assembling the spacer.
[Fig. 17] Fig. 17 is a diagram illustrating a procedure for assembling the spacer.
[Fig. 18] Fig. 18 is a cross-sectional view of a conventional pipe joint.

### Description of Embodiments

Hereinafter, embodiments in the present invention will be described with reference to the drawings.

### (First Embodiment)

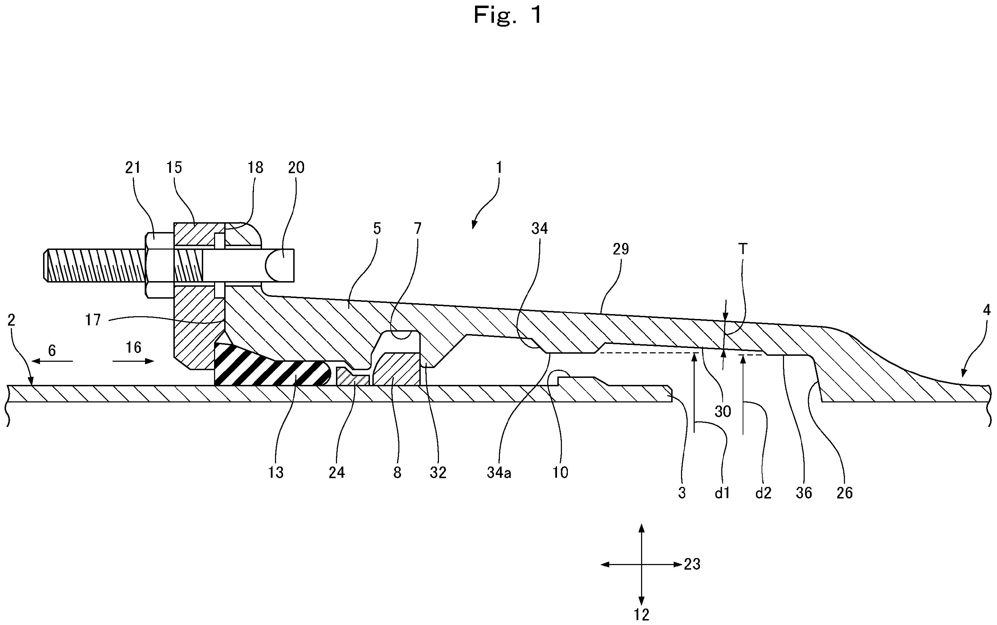

In a first embodiment, as illustrated in Fig. 1, a pipe joint 1 includes a spigot 3 formed in a first pipe 2, and a socket 5 formed in a second pipe 4, and the spigot 3 is inserted into the socket **5.** For example, ductile steel pipes or the like are used for these pipes 2, 4. These pipes 2, 4 are manufactured by a centrifugal casting method.

A lock ring accommodation groove 7 and an inner wall portion 32 are formed on an inner circumferential surface of the socket 5 over the entire circumference. The inner wall portion 32 projects inward from the inner circumferential surface of the socket 5 in a pipe radial direction 12, and faces a deeper portion of the lock ring accommodation groove 7.

A lock ring 8 is accommodated in the lock ring accommodation groove 7. The lock ring 8 is a ring having a one-slit structure in which one portion along a circumference direction is cut.

A spigot projection 10 (an example of a spigot engagement portion) is formed on an outer circumference of the spigot 3 over the entire circumference. The spigot projection 10 is provided at a location retracted from a front end of the spigot 3 by a predetermined length in a separation direction 6 of the spigot 3. The spigot projection 10 is caught on the lock ring 8 from the deeper portion of the socket 5 in the separation direction 6 of the spigot 3, thereby capable of preventing the spigot 3 from being separated from the socket 5.

A seal ring 13 that is compressed in the pipe radial direction 12, and that seals between the outer circumferential surface of the spigot 3 and the inner circumferential surface of the socket 5 is provided at a location closer to an opening of the socket 5 than the lock ring 8. The seal ring 13 is a ring made of rubber.

A push ring 15 that pushes the seal ring 13 into the deeper portion of the socket 5 is provided in an opening end portion of the socket 5. The push ring 15 includes a contact portion 18 that contacts an opening end face 17 of the socket 5 in an insertion direction 16 of the seal ring 13, and is connected to the opening end portion of the socket 5 with a plurality of bolts 20 and nuts 21.

A backup ring 24 is provided between the lock ring 8 and the seal ring 13 in a pipe axis direction 23. The backup ring 24 is a ring for maintaining an interval between the outer circumferential surface of the spigot 3 and the inner circumferential surface of the socket 5 in the pipe radial direction 12 to be a predetermined size.

The socket 5 has, on the outer circumference, an outer tapered surface 29 that gradually expands radially from a deeper end surface 26 (an example of a deeper end portion) of the socket 5 toward the opening end portion of the socket 5. The socket 5 has, on the inner circumference, an inner tapered surface 30 that gradually expands radially from the deeper end surface 26 of the socket 5 toward the opening end portion of the socket 5.

By forming the outer tapered surface 29 on the socket 5, when pulling out the pipe 4 from a centrifugal casting mold at the time of centrifugal casting, the pipe 4 can be pulled out from the side on which the socket 5 is formed.

The inner tapered surface 30 is formed between the inner wall portion 32 and the vicinity of the deeper end surface 26 of the socket 5. The outer tapered surface 29 and the inner tapered surface 30 are inclined at the same angle, and are parallel to each other.

A bending angle limiting portion 34 projecting inward in the pipe radial direction 12 from the inner tapered surface 30 is formed on the inner tapered surface 30 over the entire circumference. The bending angle limiting portion 34 is for preventing the first pipe 2 from bending with respect to the second pipe 4 beyond the maximum allowable angle (for example, 7 degrees).

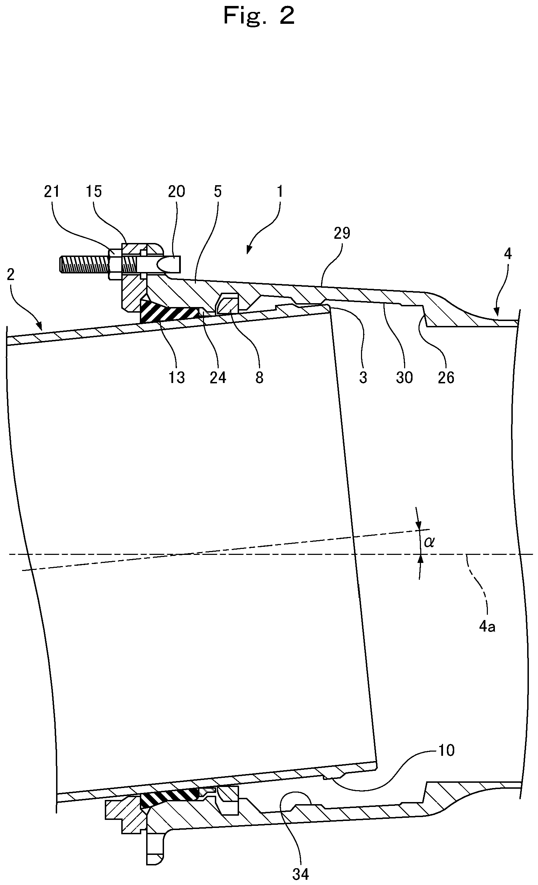

An inner circumferential surface 34a of the bending angle limiting portion 34 is parallel to a pipe axis 4a of the second pipe 4, and is formed straight in the pipe axis direction 23. The inner circumferential surface 34a has a predetermined radius centered on the pipe axis 4a of the second pipe 4. A diameter of the inner circumferential surface 34a is set so that in a case where the spigot 3 is inserted into the socket 5 with a regular insertion amount and is bent as illustrated in Fig. 2, when an outer circumferential surface of a distal end portion of the spigot 3 contacts the inner circumferential surface 34a of the bending angle limiting portion 34, a bending angle α of the spigot 3 with respect to the socket 5 is limited to the maximum allowable angle or less.

In addition, a centering surface 36 having an inner diameter d2 that is the same as an inner diameter d1 of the bending angle limiting portion 34 is formed in a deeper portion of the socket 5 than the bending angle limiting portion 34 between the inner tapered surface 30 and the deeper end surface 26 of the socket 5 over the entire circumference. The centering surface 36 is parallel to the pipe axis 4a (refer to Fig. 2) of the second pipe 4, and is formed straight in the pipe axis direction 23.

The spigot 3 is inserted into the socket 5 with the regular insertion amount, and in this case, the spigot projection 10 is located at the substantially same position as the bending angle limiting portion 34 of the socket 5 in the pipe axis direction 23.

Hereinafter, the effects in the above-described configuration will be described.

Since the outer tapered surface 29 and the inner tapered surface 30 of the socket 5 are inclined at the same angle and are parallel to each other, a pipe thickness T of the socket 5 becomes uniform between the inner wall portion 32 of the lock ring accommodation groove 7 and the deeper end surface 26 of the socket 5. Accordingly, compared with a case where the socket 5 has an inner circumferential surface parallel to the pipe axis 4a (refer to Fig. 2) of the second pipe 4, the pipe thickness T becomes thinner between the inner wall portion 32 of the lock ring accommodation groove 7 and the bending angle limiting portion 34, and between the bending angle limiting portion 34 and the deeper end surface 26 of the socket 5. Therefore, the weight of the socket 5 can be reduced, and the weight of the entire pipe is reduced. Note that the pipe thickness T in the bending angle limiting portion 34 becomes the same thickness as the pipe thickness T in the case where the socket 5 has the inner circumferential surface parallel to the pipe axis 4a (refer to Fig. 2) of the second pipe 4.

When the spigot 3 is bent with respect to the socket 5 in a state in which the spigot 3 is inserted into the socket 5, since the socket 5 has the inner tapered surface 30, the bending angle α (refer to Fig. 2) of the spigot 3 with respect to the socket 5 increases, and a bending performance of the first pipe 2 and the second pipe 4 improves. Accordingly, since the first pipe 2 and the second pipe 4 are sufficiently bent in response to shaking at the time of the occurrence of an earthquake, damage to the pipes 2, 4 can be prevented.

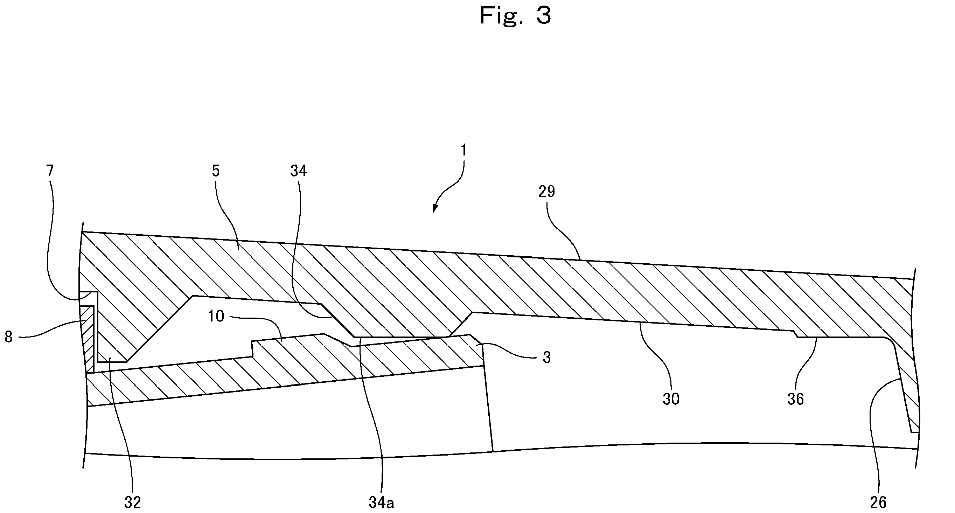

Fig. 2 and Fig. 3 illustrate a state where the spigot 3 is inserted into the socket 5 with the regular insertion amount and is bent. In this case, since the outer circumferential surface of the distal end portion of the spigot 3 contacts the inner circumferential surface 34a of the bending angle limiting portion 34, the above-described bending angle α is limited to the maximum allowable angle or less. Accordingly, the spigot 3 can be prevented from being excessively bent with respect to the socket 5. Therefore, a seal function of the seal ring 13 is sufficiently maintained, and it is possible to prevent the occurrence of water leakage from between the outer circumferential surface of the spigot 3 and the inner circumferential surfaces of the socket 5.

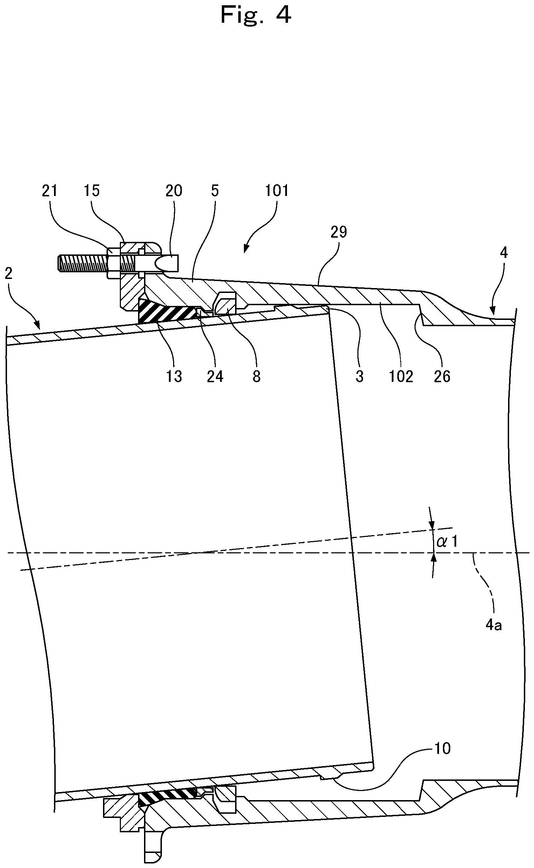

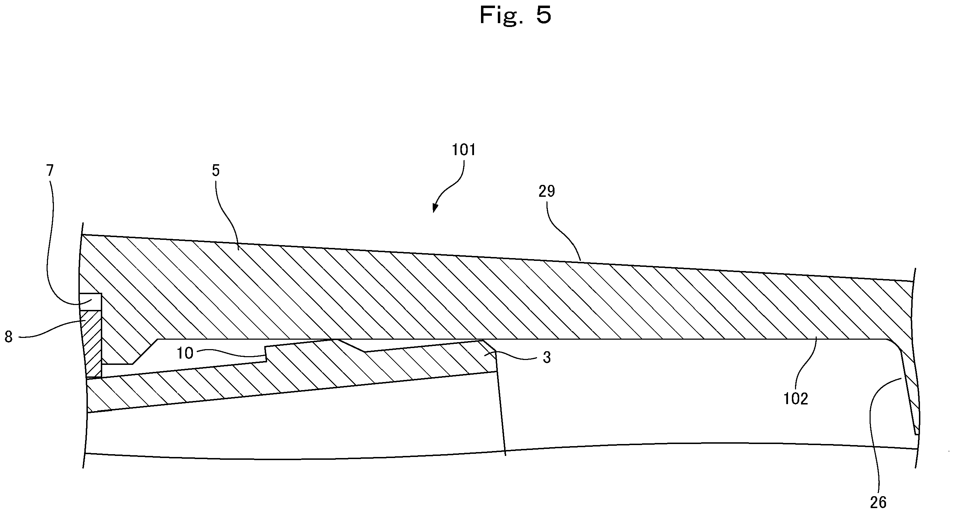

Meanwhile, as a first reference example, a socket 5 of a pipe joint 101 illustrated in Fig. 4 and Fig. 5 does not have the inner tapered surface 30 on an inner circumference, and has an inner circumferential surface 102 parallel to a pipe axis 4a of a second pipe 4. In Fig. 4 and Fig. 5, the inner circumferential surface 102 of the socket 5 has a diameter smaller than the inner circumferential surface 34a (refer to Fig. 3) of the bending angle limiting portion 34 at the position of a distal end portion of a spigot 3.

According to this, when the spigot 3 is bent with respect to the socket 5 in a state in which the spigot 3 is inserted into the socket 5 with a regular insertion amount, a spigot projection 10 contacts the inner circumferential surface 102 of the socket 5. Therefore, a bending angle α1 of the spigot 3 with respect to the socket 5 becomes smaller than the bending angle α of the pipe joint 1 illustrated in Fig. 2 described above. Accordingly, the pipe joint 101 in the first reference example is inferior in the bending performance of a first pipe 2 and the second pipe 4 as compared with the pipe joint 1 in the first embodiment illustrated in Fig. 2 described above.

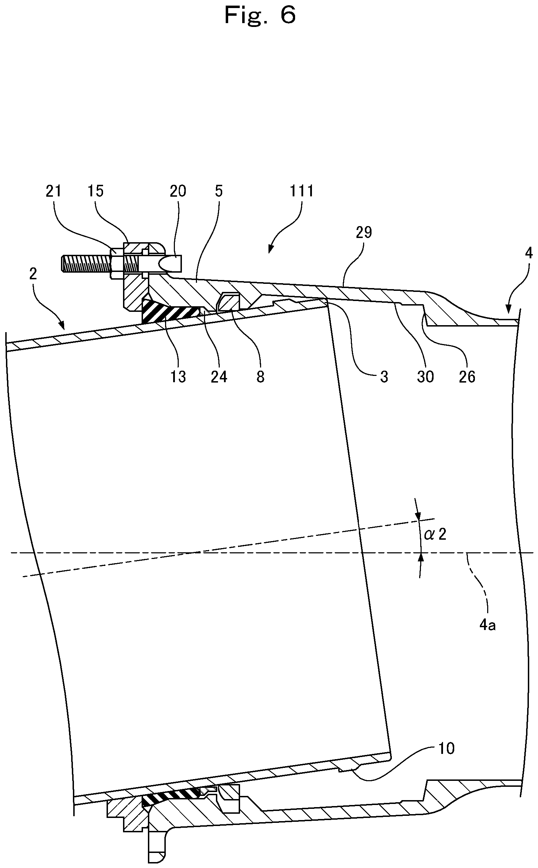

In addition, as a second reference example, although a socket 5 of a pipe joint 111 illustrated in Fig. 6 has an inner tapered surface 30, the bending angle limiting portion 34 is not formed.

According to the second reference example, when a spigot 3 is bent with respect to the socket 5 in a state in which the spigot 3 is inserted into the socket 5 with a regular insertion amount, an outer circumferential surface of a distal end portion of the spigot 3 contacts the inner tapered surface 30. Therefore, a bending angle α2 of the spigot 3 with respect to the socket 5 may become larger than the bending angle α of the pipe joint 1 illustrated in Fig. 2 described above, and may exceed the maximum allowable angle. Accordingly, in the pipe joint 111 in the second reference example, there is a risk that the spigot 3 is excessively bent with respect to the socket 5, the seal function of a seal ring 13 deteriorates, and water leakage occurs from between an outer circumferential surface of the spigot 3 and an inner circumferential surface of the socket 5.

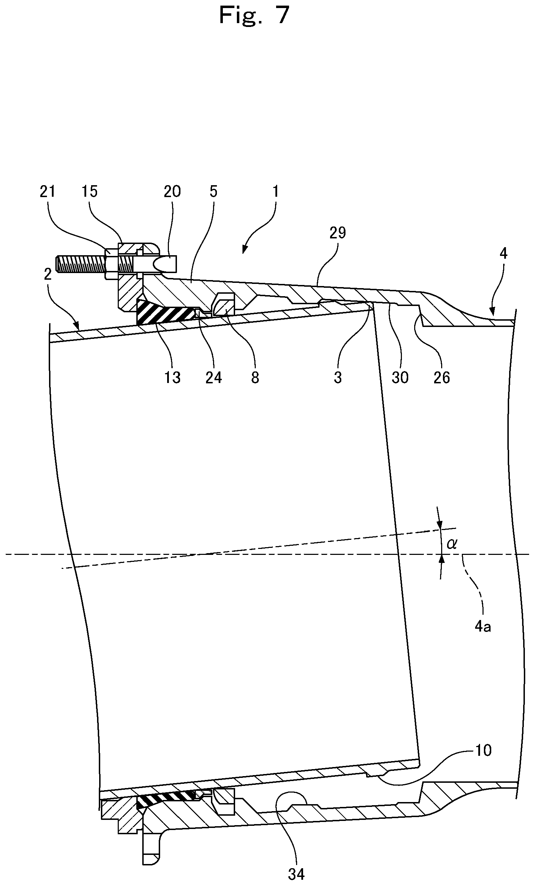

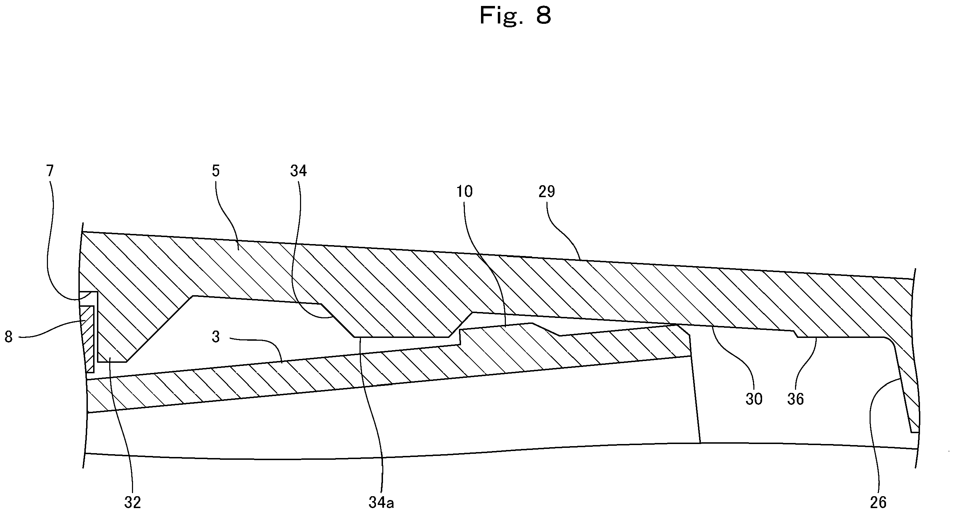

Furthermore, in Fig. 2 and Fig. 3 illustrating the first embodiment, the situation is illustrated in which the spigot 3 is bent with respect to the socket 5 in the state in which the spigot 3 is inserted into the socket 5 with the regular insertion amount. On the other hand, in Fig. 7 and Fig. 8 illustrating the first embodiment, a situation is illustrated in which the spigot 3 is bent with respect to the socket 5 in a state in which the spigot 3 is inserted into the socket 5 with an insertion amount greater than the regular insertion amount.

According to this, the outer circumferential surface of the distal end portion of the spigot 3 does not contact the bending angle limiting portion 34, but contacts the inner tapered surface 30 in a deeper portion of the socket 5 than the bending angle limiting portion 34. Since the diameter of the inner tapered surface 30 is reduced toward the deeper portion of the socket 5, the bending angle α of the spigot 3 with respect to the socket 5 increases in the range equal to or less than the maximum allowable angle, and the bending performance of the first pipe 2 and the second pipe 4 improves.

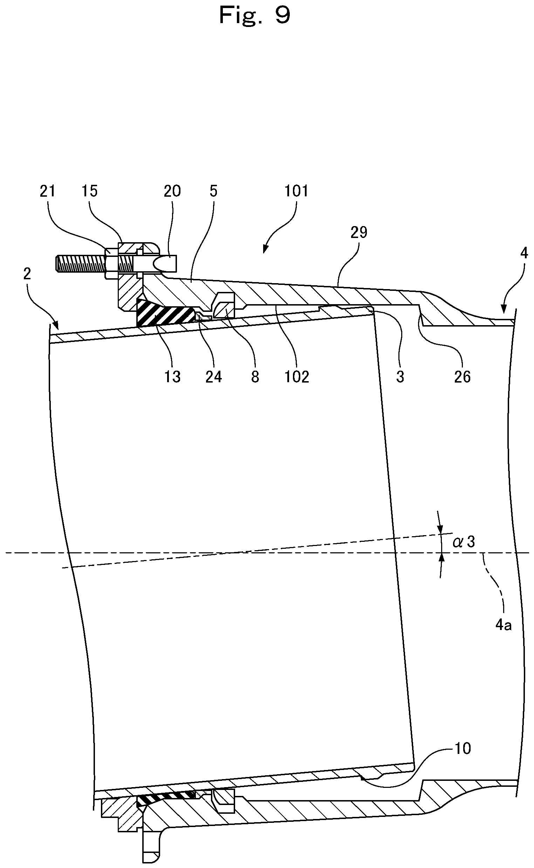

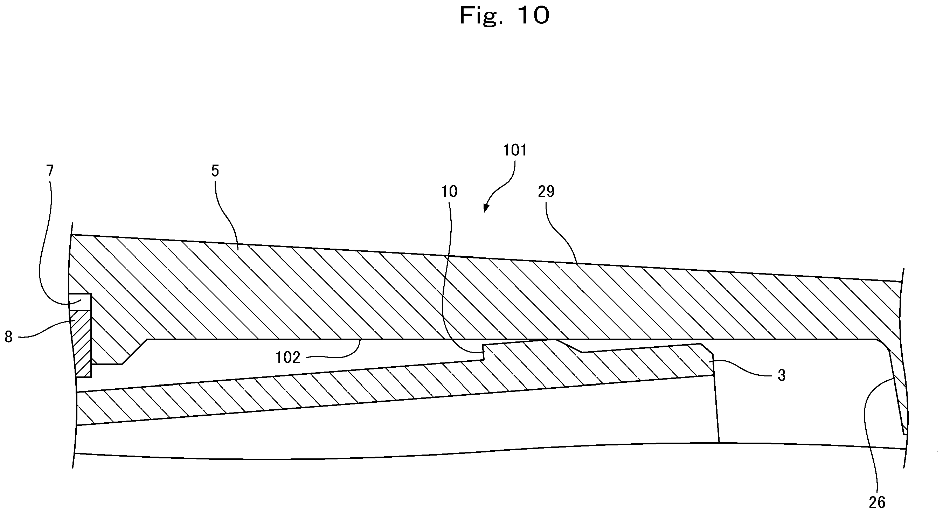

Meanwhile, as a third reference example, a socket 5 of a pipe joint 101 illustrated in Fig. 9 and Fig. 10 does not have an inner tapered surface 30 on an inner circumference, but has an inner circumferential surface 102 parallel to a pipe axis 4a of a second pipe 4. In Fig. 9 and Fig. 10, the inner circumferential surface 102 of the socket 5 has a diameter smaller than the inner circumferential surface 34a (refer to Fig. 3) of the bending angle limiting portion 34 in a contact portion between a spigot projection 10 and the inner circumferential surface 102 of the socket 5.

According to this, when the spigot 3 is bent with respect to the socket 5 in a state in which the spigot 3 is inserted into the socket 5 with an insertion amount greater than the regular insertion amount, the spigot projection 10 contacts the inner circumferential surface 102 of the socket 5. Therefore, a bending angle α3 of the spigot 3 with respect to the socket 5 becomes smaller than the bending angle α of the pipe joint 1 illustrated in Fig. 7 described above. Accordingly, the pipe joint 101 in the third reference example is inferior in the bending performance of the first pipe 2 and the second pipe 4 as compared with the pipe joint 1 in the first embodiment illustrated in Fig. 7 described above.

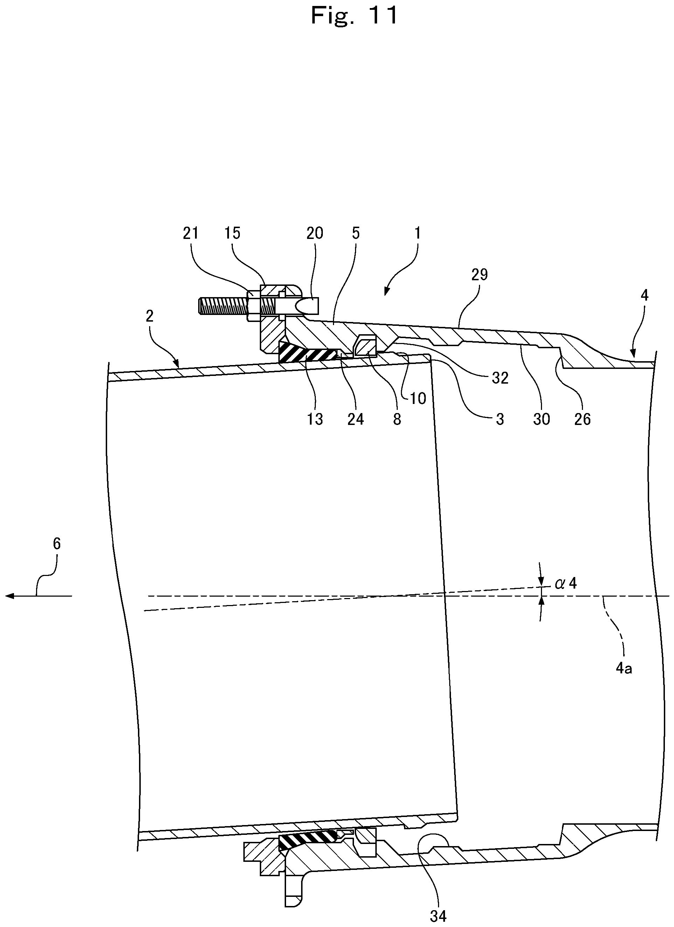

Furthermore, in Fig. 11 illustrating the first embodiment, when the spigot 3 is bent with respect to the socket 5 in a state in which the spigot 3 is moved in the separation direction 6 and the spigot projection 10 is engaged with the lock ring 8, the outer circumference of the spigot projection 10 abuts to an inner circumference of the inner wall portion 32. Therefore, the bending angle of the spigot 3 with respect to the socket 5 is maintained at a predetermined angle α4 equal to or less than the maximum allowable angle. In this case, also in the pipe joint 101 that has the inner circumferential surface 102 instead of the inner tapered surface 30 and that is illustrated in Fig. 4 and Fig. 9 as the above-described first and third reference examples, the bending angle of the spigot 3 with respect to the socket 5 is maintained at the same predetermined angle α4 as described above. In addition, also in the pipe joint 111 that has the inner tapered surface 30 illustrated in Fig. 6 as the above-described second reference example, but does not form the bending angle limiting portion 34, the bending angle of the spigot 3 with respect to the socket 5 is maintained at the same predetermined angle α4 as described above.

In the above-described first embodiment, as illustrated in Fig. 1, the centering surface 36 is formed between the inner tapered surface 30 and the deeper end surface 26 of the socket 5. However, the centering surface 36 may not be formed, and the inner tapered surface 30 may reach the deeper end surface 26 of the socket 5.

### (Second Embodiment)

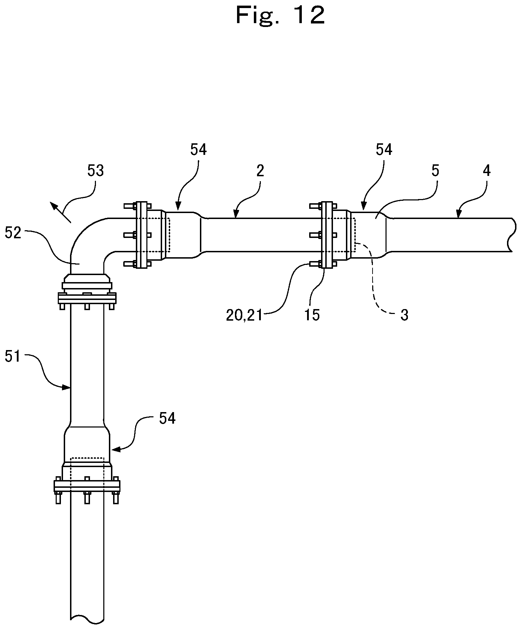

Hereinafter, a second embodiment will be described based on Fig. 12 to Fig. 17. Configurations that are the same as the configurations already described in the above-described first embodiment are denoted by the same numerals, and a detailed description thereof will be omitted.

As illustrated in Fig. 12, a conduit 51 formed by joining a plurality of pipes has a bent portion 52, and in the bent portion 52, an uneven force 53 is applied due to the effect of fluid pressure in the conduit 51. A pipe joint 54 is provided in the conduit 51 as described above. In the pipe joint 54, a spigot 3 of a first pipe 2 is inserted into a socket 5 of a second pipe 4, and the first pipe 2 and the second pipe 4 are joined together.

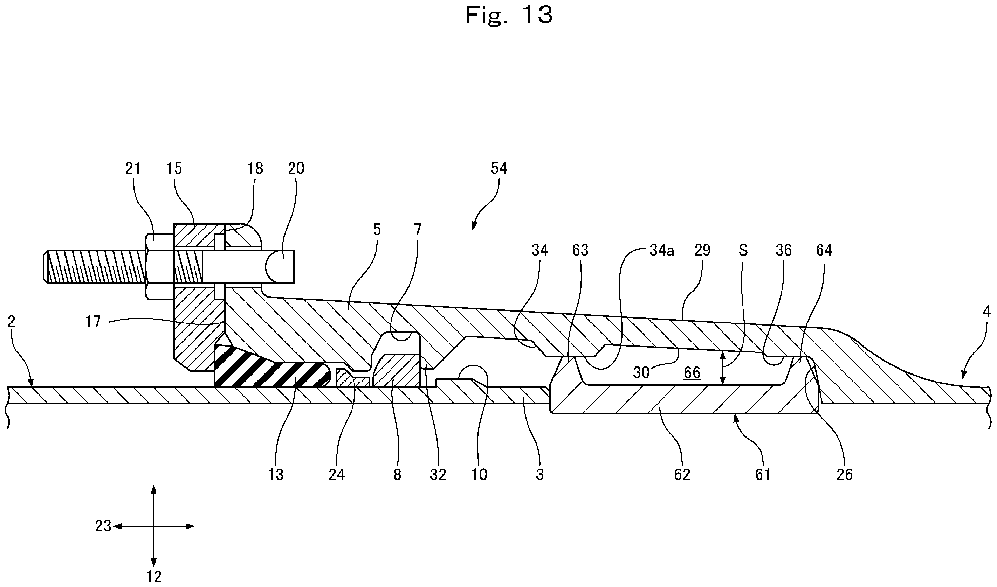

As illustrated in Fig. 13, the pipe joint 54 includes a spacer 61 for limiting the movement of the spigot 3 in an insertion direction. The spacer 61 includes a cylindrical spacer body 62 arranged between a distal end portion of the spigot 3 and a deeper end surface 26 of the socket 5, a first contacting portion for centering 63 contacting an inner circumferential surface 34a of a bending angle limiting portion 34, and a second contacting portion for centering 64 contacting a centering surface 36 in the socket 5.

The first contacting portion for centering 63 is provided in one end portion of the spacer body 62 in a pipe axis direction 23 over the entire circumference. The second contacting portion for centering 64 is provided in the other end portion of the spacer body 62 in the pipe axis direction 23 over the entire circumference. The first contacting portion for centering 63 and the second contacting portion for centering 64 are circular members projecting outward from an outer circumferential surface of the spacer body 62 in a pipe radial direction 12.

A space 66 is formed between the first contacting portion for centering 63 and the second contacting portion for centering 64 in the pipe axis direction 23, and between the outer circumferential surface of the spacer body 62 and an inner tapered surface 30 in the pipe radial direction 12 over the entire circumference. An interval S between the outer circumferential surface of the spacer body 62 and the inner tapered surface 30 in the pipe radial direction 12 becomes larger toward an opening end portion of the socket 5.

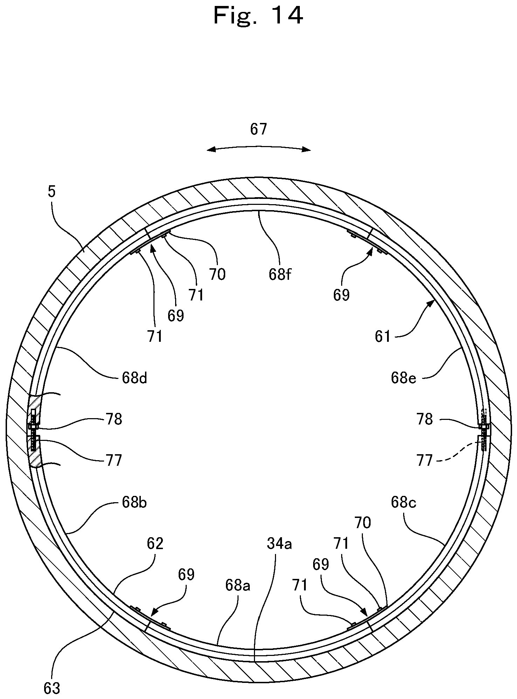

As illustrated in Fig. 14, the spacer 61 is divided into a plurality of arc-shaped segments 68a to 68f in a pipe circumference direction 67. That is, each of the segments 68a to 68f has the spacer body 62 and the first and second contacting portions for centering 63 and 64 that are divided into a plurality of segments in the pipe circumference direction 67.

The end portions of the lower-half segments 68a to 68c that are adjacent to each other in the pipe circumference direction 67 are connected via connection members 69, and the end portions of the upper-half segments 68d to 68f are connected via connection members 69. Each of the connection members 69 has a connection plate 70, bolts 71, and the like.

For example, the connection plate 70 is attached over an inner circumference of one segment 68a and an inner circumference of the other segment 68b that are adjacent to each other. Then, one end portion of the connection plate 70 is connected to the one segment 68a by using one bolt 71, and the other end portion of the connection plate 70 is connected to the other segment 68b by using the other bolt 71. Accordingly, the one segment 68a and the other segment 68b are connected to each other.

Similarly, the connection member 69 is used to connect the segment 68a and the segment 68c, the segment 68d and the segment 68f, and the segment 68e and the segment 68f, respectively.

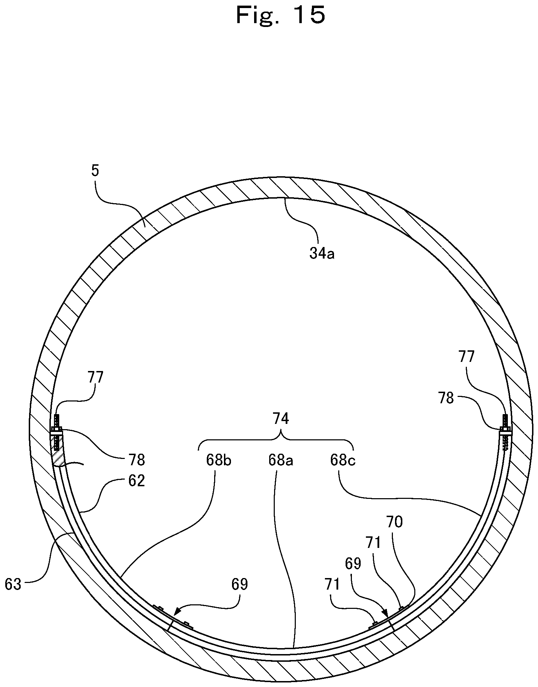

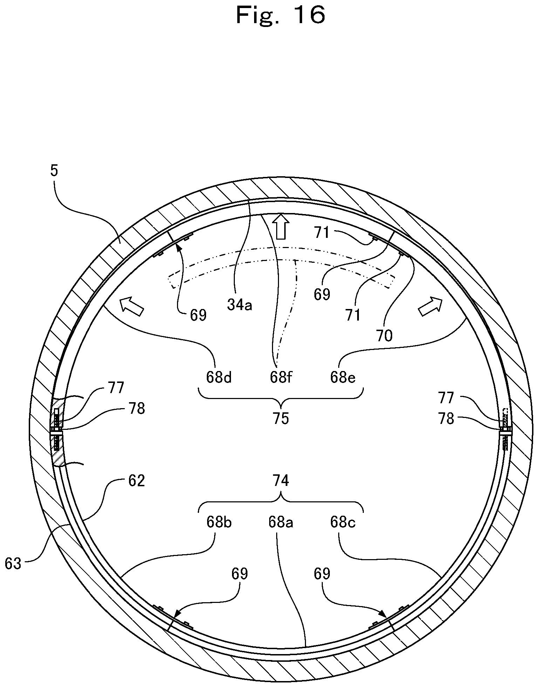

As illustrated in Fig. 15, the lower-half segments 68a to 68c are connected together via the connection members 69 to form a lower semicircle body 74 corresponding to the lower half of the spacer 61. As illustrated in Fig. 16, the upper-half segments 68d to 68f are connected together via the connection members 69 to form an upper semicircle body 75 corresponding to the upper half of the spacer 61.

Centering headless bolts 77 and nuts 78 screwed onto the headless bolts 77 are provided between both end faces of the lower semicircle body 74 in the pipe circumference direction 67 and both end faces of the upper semicircle body 75 in the pipe circumference direction 67 that face each other in an up-down direction.

Hereinafter, a description will be given of a method of assembling the spacer 61 and set the spacer 61 to the inside of the socket 5 before joining the first pipe 2 to the second pipe 4.

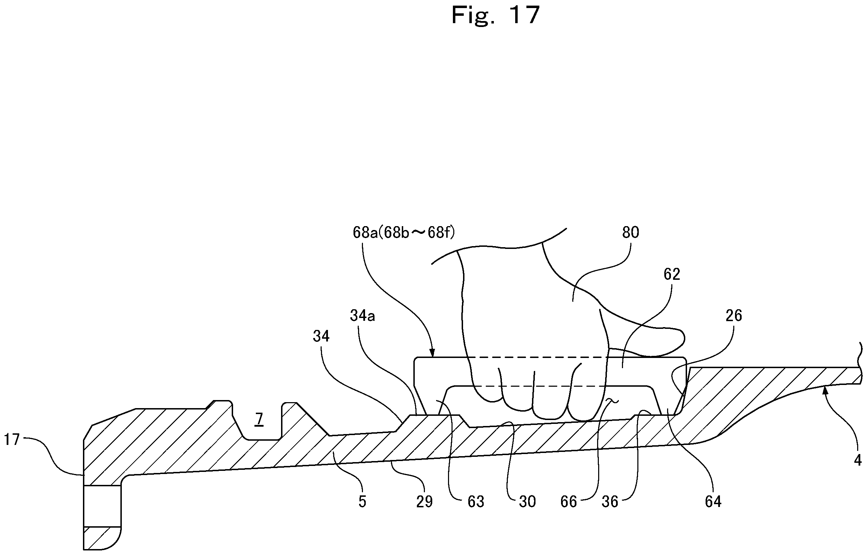

First, as illustrated in Fig. 15, the three segments 68a to 68c, which occupy the lower half of the socket 5, are set to the inside of the socket 5. At this time, as illustrated in Fig. 17, the space 66 is formed between the outer circumferential surface of the spacer body 62 in each of the segments 68a to 68c and the inner tapered surface 30. Accordingly, there is no risk that an operator's hand 80 and fingers are pinched between the outer circumferential surface of the spacer body 62 in each of the segments 68a to 68c and the inner tapered surface 30. Therefore, the safety and the workability of the assembly work of the spacer 61 are maintained.

Thereafter, as illustrated in Fig. 15, the lower half segments 68a to 68c are connected together by using the connection plates 70 and the bolts 71 of the connection members 69 to form the lower semicircle body 74 corresponding to the lower half of the spacer 61.

Thereafter, the headless bolts 77 onto which the nuts 78 are screwed are attached to the both end faces of the lower semicircle body 74, so that upper portions of the headless bolts 77 project upward from the both end faces of the lower semicircle body 74.

As illustrated in Fig. 16, the remaining three segments 68d to 68f, which occupy the upper half of the socket 5, are set to the inside of the socket 5. At this time, similar to the case where the lower-half segments 68a to 68c illustrated in Fig. 17 described above are set, the space 66 is formed between the outer circumferential surface of the spacer body 62 in each of the segments 68d to 68f and the inner tapered surface 30. Accordingly, there is no risk that the operator's hand 80 and fingers are pinched between the outer circumferential surface of the spacer body 62 in each of the segments 68d to 68f and the inner tapered surface 30. Therefore, the safety and the workability of the assembly work of the spacer 61 are maintained.

Thereafter, the upper-half segments 68d to 68f are connected together by using the connection plates 70 and the bolts 71 of the connection members 69 to form the upper semicircle body 75 corresponding to the upper half of the spacer 61. Then, the upper portions of the headless bolts 77 are inserted into holes formed in the both end faces of the upper semicircle body 75. Accordingly, the headless bolts 77 and the nuts 78 are provided between the both end faces of the lower semicircle body 74 and the both end faces of the upper semicircle body 75.

Next, the upper semicircle body 75 is lifted by using a jack or the like, so as to cause an outer peripheral end of the first contacting portion for centering 63 of the upper semicircle body 75 to contact the inner circumferential surface 34a of the bending angle limiting portion 34, and to cause an outer peripheral end of the second contacting portion for centering 64 to contact the centering surface 36 in the socket 5.

In this state, as illustrated in Fig. 14, the nuts 78 of the headless bolts 77 are turned and raised, so as to cause the nuts 78 to contact the both end faces of the upper semicircle body 75, thereby assembling the spacer 61. Thereafter, the spacer 61 is set to the inside of the socket 5 by removing the jack.

At this time, as illustrated in Fig. 13, the outer peripheral end of the first contacting portion for centering 63 of the spacer 61 contacts the inner circumferential surface 34a of the bending angle limiting portion 34, and the outer peripheral end of the second contacting portion for centering 64 contacts the centering surface 36 in the socket 5. Therefore, the attachment position of the spacer 61 does not shift in the pipe radial direction 12, and thus the centering work of the spacer 61 with respect to the socket 5 can be easily performed.

Thereafter, the lock ring 8 is fitted into the lock ring accommodation groove 7, and the spigot 3 is inserted into the socket 5 until the front end of the spigot 3 abuts to the spacer 61. Furthermore, each of the backup ring 24 and the seal ring 13 is inserted into between the outer circumferential surface of the spigot 3 and the inner circumferential surface of the socket 5 from the opening end portion of the socket 5, and the push ring 15 is connected to the opening end portion of the socket 5 by using the bolts 20 and the nuts 21. Accordingly, the first pipe 2 is joined to the second pipe 4, and the spacer 61 is provided between the distal end portion of the spigot 3 and the deeper end surface 26 of the socket 5.

In the pipe joint 54 as described above, since the spacer 61 is provided between the distal end portion of the spigot 3 and the deeper end surface 26 of the socket 5 as described above, the movement of the spigot 3 in the insertion direction is limited. In addition, since the spigot projection 10 is caught on the lock ring 8, the movement in the separation direction of the spigot 3 is limited. Therefore, the relative movement of the spigot 3 and the socket 5 in the pipe axis direction 23 is limited. Accordingly, as illustrated in Fig. 12, in the portion on which the uneven force 53 is applied to the conduit 51, the movement of the pipe joint 54 is limited, and the expansion/contraction function between the spigot 3 and the socket 5 and the bending function of the spigot 3 and the socket 5 are regulated. Accordingly, it is possible to prevent an adverse effect on the sealing performance of the pipe joint 54 caused by the conduit 51 stretching/contracting or bending in the direction in which the uneven force 53 is applied to.

In the above-described second embodiment, as illustrated in Fig. 14, the spacer 61 is divided into the six segments 68a to 68f. However, the number is not limited to six, and the spacer 61 may be divided into a plurality of pieces other than six pieces.

In the above-described first and second embodiments, as illustrated in Fig. 1 and Fig. 13, the bending angle limiting portion 34 is formed between the inner wall portion 32 and the deeper end surface 26 in the pipe axis direction 23, and is separated from the inner wall portion 32 into the deeper portion of the socket 5. However, the bending angle limiting portion 34 may be extended toward the opening end of the socket 5 to be connected to the inner wall portion 32.

## Claims

1. A pipe joint, comprising:
a spigot formed in a first pipe;
a socket formed in a second pipe;
a lock ring accommodation groove formed in an inner circumference of the socket;
a lock ring accommodated in the lock ring accommodation groove; and
a spigot engagement portion formed in an outer circumference of the spigot,
the spigot engagement portion being caught on the lock ring from a deeper portion of the socket in a separation direction of the spigot in a state in which the spigot is inserted into the socket, thereby capable of preventing the spigot from being separated from the socket,
wherein the socket has, on an inner circumference, an inner tapered surface expanding radially from a deeper end portion of the socket toward an opening end portion of the socket, and a bending angle limiting portion projecting inward from the inner circumference of the socket in a pipe radial direction,
the inner tapered surface is formed between the lock ring accommodation groove and the deeper end portion of the socket, and
the bending angle limiting portion prevents the first pipe from being bent with respect to the second pipe beyond an allowable angle.

2. The pipe joint according to claim 1, wherein the socket has, on an outer circumference, an outer tapered surface expanding radially from a deeper portion of the socket toward the opening end portion of the socket.

3. The pipe joint according to claim 1, wherein a spacer for limiting movement of the spigot in an insertion direction into the socket is provided between a distal end portion of the spigot and the deeper end portion of the socket,
a centering surface is formed between the inner tapered surface and the deeper end portion of the socket at a deeper portion of the socket than the bending angle limiting portion, and
the spacer includes a first contacting portion for centering contacting an inner circumferential surface of the bending angle limiting portion, and a second contacting portion for centering contacting the centering surface.

4. The pipe joint according to claim 3, wherein the spacer includes a cylindrical spacer body arranged between the distal end portion of the spigot and the deeper end portion of the socket, and is divided into a plurality of arc-shaped segments in a pipe circumference direction,
end portions of the segments adjacent to each other in the pipe circumference direction are connected to each other,
the first contacting portion for centering is provided in one end portion of the spacer body in a pipe axis direction,
the second contacting portion for centering is provided in another end portion of the spacer body in the pipe axis direction,
a space is formed between the first contacting portion for centering and the second contacting portion for centering in the pipe axis direction, and between an outer circumferential surface of the spacer body and the inner tapered surface in the pipe radial direction, and
an interval between the outer circumferential surface of the spacer body and the inner tapered surface in the pipe radial direction increases toward the opening end portion of the socket.
